(19) Europäisches Patentamt
European Patent Office
Office européen des brevets

(11) **EP 3 312 143 B1**

(12) **EUROPEAN PATENT SPECIFICATION**

(45) Date of publication and mention
of the grant of the patent:
**20.10.2021 Bulletin 2021/42**

(51) Int Cl.:
***C01C 1/26*** *(2006.01)*    ***B01D 3/14*** *(2006.01)*
***B01D 53/14*** *(2006.01)*    ***C01D 7/18*** *(2006.01)*

(21) Application number: **17197331.6**

(22) Date of filing: **19.10.2017**

(54) **SYSTEM OF DEVICES FOR CARRYING A METHOD FOR BRINE CARBONIZATION WITH ADDITIONAL AMOUNT OF AMMONIA IN A  PROCESS OF SODA PRODUCTION**

SYSTEM VON VORRICHTUNGEN ZUR DURCHFÜHRUNG EINES VERFAHRENS ZUR SALZLAKEKARBONISIERUNG MIT ZUSÄTZLICHER MENGE AN AMMONIAK IN EINEM PROZESS ZUR SODAHERSTELLUNG

SYSTÈME DE DISPOSITIFS POUR LA MISE EN OEUVRE D'UN PROCÉDÉ DE CARBONISATION DE SAUMURE AVEC UNE QUANTITÉ SUPPLÉMENTAIRE D'AMMONIAC DANS UN PROCESSUS DE PRODUCTION DE SOUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2016  PL 41917116**

(43) Date of publication of application:
**25.04.2018 Bulletin 2018/17**

(73) Proprietor: **CIECH R&D Sp. z o.o.**
**00-684 Warszawa (PL)**

(72) Inventors:
• **SKOWRON, Kazimierz**
**88-100 Inowroclaw (PL)**
• **SOBCZAK, Waldemar**
**88-100 Inowroclaw (PL)**
• **KIEDZIK, Lukasz**
**88-100 Inowroclaw (PL)**
• **ZELAZNY, Ryszard**
**88-100 Inowroclaw (PL)**
• **BUCZKOWSKI, Roman**
**87-122 Grebocin (PL)**
• **WACHOWIAK, Maciej**
**88-100 Inowroclaw (PL)**
• **CICHOSZ, Marcin**
**87-600 Lipno (PL)**

(74) Representative: **Patpol Kancelaria Patentowa Sp. z o.o.**
**Nowoursynowska 162J**
**02-776 Warszawa (PL)**

(56) References cited:
**EP-A1- 1 325 887    GB-A- 189 913 771**
**RU-C1- 2 283 282    RU-C2- 2 209 181**
**RU-C2- 2 418 744**

**Description**

The invention relates to a system of devices for carbonation of ammoniated brine in the ammonia-soda process. In particular, the invention provides the system useful for carrying out a method for production of ammoniated brine with the increased NH3 concentration in the ammonia-soda processAs described herein the ammoniated brine with the increased NH3 concentration is useful in practical realization of the process of carbonation in the ammonia-soda process carried out on the system of devices according to the present invention.

The soda production process known from the prior art is one of the most technologically complex chemical processes, which consist of a combination of unit processes such as: physical absorption, absorption with a chemical reaction, crystallization with a chemical reaction, distillation and filtration. The process relies on carbonation of ammoniated brine from the absorber (ABM) with a specified $CO_2$ content in the carbonating column (CL). The essence of the process is sodium bicarbonate crystallization carried out in the apparatus consisting of the following parts: a cooling, a reaction and a gaseous. The inlet of the bottom and carbonating gases and the outlet for the bicarbonate slurry are located in the cooling part at the bottom of the column. The two-stream cooling system is installed in the cooling part. The inlet of the top gas is located in the lower portion of the reaction part, and that of the ammoniated and precarbonated brine are in the upper portion of the reaction part. An exemplary column for carrying out the process is 28.65 m high, with the cooling part inner diameter of 2.8 m, and that of the absorption tower plate part of 3 m.

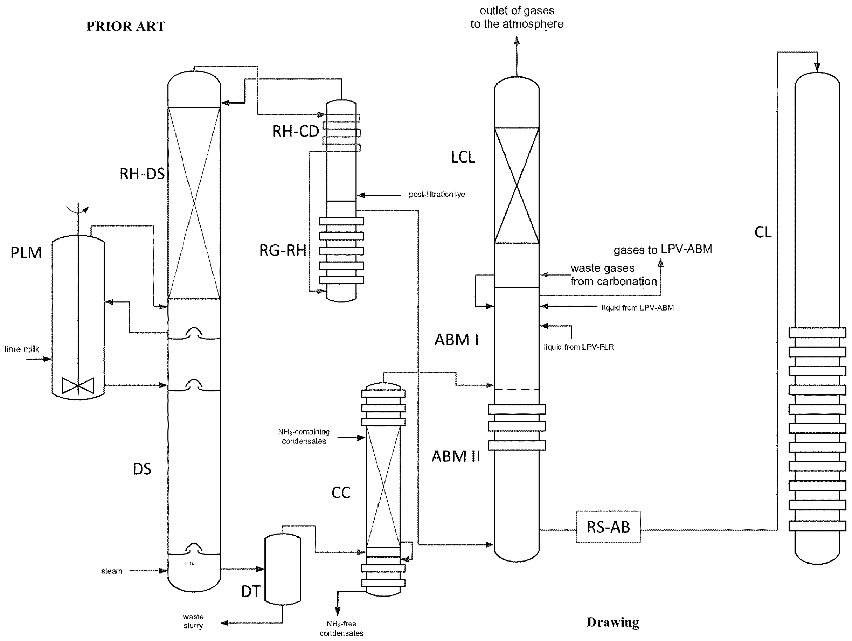

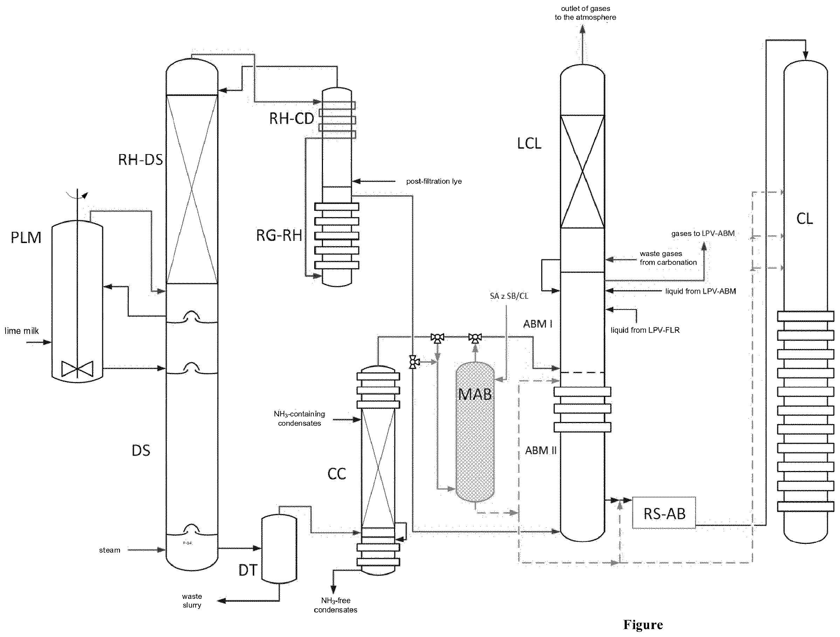

A typical soda process can be carried out in such a way that the carbonating column is supplied with the precarbonated ammoniated brine of the established parameters in the amount of, e.g., about 65 $m^3$/h, which undergoes the further process of carbonation with carbon dioxide delivered as the top gas (about 4.0 thousand $Nm^3$/h) and the bottom gas (about 2.8 thousand $Nm^3$/h). The exemplary temperature regime is about 338 K at the mid-height and 303 K at the column exit. The obtained slurry is separated on the belt filters (FLR). The process yield as determined before the filtration process is about 75%. NH3 and $CO_2$ is regenerated from the post-filtration lye and delivered to the heat exchanger of the distillation column (RH-CD). The preheated lye is subsequently passed in the countercurrent against the gases from the distiller (DS) into the preheater of the distiller (RH-DS). The procedure results in: distilling off ammonia and carbon dioxide, heating the fluid and decomposing the ammonium carbonate salts contained in the lye. The prepared liquid is directed to the prelimer (PLM), where the calcium hydroxide suspension and the liquid from RH-DS are mixed, resulting in the partial decomposition of ammonium chloride to evolve ammonia. The gas liberated by the decomposition passes through RH-DS, and the obtained slurry is directed to DS, where the remaining ammonia-containing compounds are decomposed. The gases from the distillation process are cooled in the gas cooler (RG-RH) and directed to ABM. Ammonia and carbon dioxide contained in the condensates from RG-RH are directed to the distiller of ammoniacal condensates (CC), and then to ABM. The flowsheet of the system, where the above-described process is conducted, is shown on the Drawing.

A process for the production of $NaHCO_3$ by the ammonia-soda method, comprising introducing gaseous ammonia to the carbonating column at the amount not higher than the amount lost in the production process, is known from the patent description PL39421. The carbonation process is conducted at about 343 K, and the temperature of the slurry at the exit from the column is about 308 K. However, the main drawback of said process is an effect of blowing ammonia off in the amount of 5-15% relative to the total amount introduced together with the ammoniated brine solution. Consequently, the process disclosed in PL39421 precludes optimal process control aimed at achieving the maximum yield and improving quality of the sodium bicarbonate crystals.

A process for soda production, which involves introduction of gas containing 5-98% of ammonia into the highest temperature zone of the carbonating column is also known from patent description PL158595. The fundamental drawback of said process is an effect of desorption of large amounts of ammonia, co-crystallization of the ammonium carbonate compounds and non-homogenous distribution of supersaturation in the crystallization zone.

RU2209181C2 discloses a method for carbonization of ammoniated brine comprising dividing the ammoniated and partially carbonized brine into two streams, each having an ammonia content of 76-85 $kg/m^3$. One of the streams is further saturated with ammonia to its content of 94-110 kg/ $m^3$ and fed to the carbonating column at a place where the concentration of bound ammonia in the ammoniated brine is 21-25 $kg/m^3$. The resulting sodium bicarbonate comprises crystals which are larger than 80 $\mu$m.

Despite the fact that efforts for improving the soda production by the ammonia-soda process have been carried out for years, there is still a high demand for increasing the carbonation process yield.

The present inventors have developed the system of devices for carbonation of the ammoniated brine in the ammonia-soda process with which it is possible to improve process yield as compared to the process employed so far. Moreover, larger sodium bicarbonate crystals are obtained by the process carried out in the system according to the invention, i.e. a fraction of crystals smaller than 40 $\mu$m is reduced. This leads to improvement of the filtration conditions and washing of sodium bicarbonate and reducing the weight loss of the final product in the process of washing on the filters. As a result of the technical solutions of the invention, consumption of heat in the distillation and calcination process and in the process of calcium chloride production is reduced.

The invention provides a system of devices for carbonation of ammoniated brine in the ammonia-soda process comprising an ammonia distillation column (CC), an absorber (MAB) and carbonating column (CL), in which a gas pipeline exiting an ammonia distillation column (CC) is equipped with a valve for directing portion of gas from the ammonia distillation column (CC) into a stub pipe of the absorber (MAB), wherein said brine constitutes the absorbing liquid, which is delivered to the absorber (MAB) with a separate stub pipe, while an outlet pipeline at the bottom of the absorber (MAB) is equipped with a pump and installation for supplying the brine with increased $NH_3$ content to a carbonating column (CL) at 30-90% of the height thereof. Preferably, the outlet pipeline from the absorber (MAB) is equipped with a valve for directing portion of the brine with increased $NH_3$ content to the bottom of an absorber (ABM) in a post-carbonation gases scrubber column (LCL). Even more preferably, the outlet pipeline from the absorber (MAB) is equipped with an additional valve for directing portion of the brine with increased $NH_3$ content to a post-ammonia absorption brine tank (RS-AB).

The system according to the invention is useful for carrying out a method for production of ammoniated brine with the increased $NH_3$ concentration in the ammonia-soda process, wherein the additional saturation of the ammoniated brine up to the NH3 concentration of 5.5 to 6.5 mol·dm$^{-3}$ is carried out separately with the ammoniating agent, which constitutes the gases from the ammonia distillation column, optionally mixed with the gases from the cooler in the ammonia regeneration system, and wherein the absorbing liquid constitutes the precarbonated ammoniated brine, preferably from the column gas scrubber. In some practical applications of the system according to the present invention, the additional saturation is carried out in the absorption apparatus of the scrubber and/or absorption tower plate and/or spray construction and the ammoniating agent is delivered to the absorber in a form of a gas under the pressure of 0.01-0.30 MPa.

The system according to the invention is useful for carrying out a method of the carbonation of the ammoniated brine, in the ammonia-soda process, in the carbonating column, wherein said carbonating column is supplied at the top with the ammoniated brine from the absorber, and wherein additionally the precarbonated ammoniated brine with an increased $NH_3$ concentration within the range of 5.5 to 6.5 mol·dm$^{-3}$ is added into the carbonating column, in the amount of 5 - 40% by weight of the basic brine stream, and at the height of 30-90% of said column as measured from its base. In practical realization of this method carried out on the system according to the present invention the brine with the increased $NH_3$ content is supplied to the carbonating column with 1 to 5 points at the same or different heights of the column. In some cases the brine with the increased $NH_3$ concentration is added, wherein said brine is prepared by the additional saturation of the ammoniated brine and/or precarbonated ammoniated brine with the ammoniacal gases from the ammonia distillation column and/or gases from the gas cooler of the ammonia regeneration system. In yet onother practical use of the system according to the present invention the brine with the increased $NH_3$ content is divided and a portion thereof is directed to the bottom part of the absorber for $NH_3$ absorption in the scrubber column of the post-carbonation gases, or to the brine tank after $NH_3$ absorption, and further with the post-absorption brine to the carbonating column.

The above-described system according to the present invention and its practical application in the method for production of ammoniated brine with the increased $NH_3$ concentration in the ammonia-soda process result in advantages, as compared with processes for soda production by the ammonia-soda process carried out on the systems known from the prior art. By carring out the method for production of ammoniated brine with the increased $NH_3$ concentration in the ammonia-soda process on the system according to the invention, the carbonation process yield is increased. The effect is confirmed by the equation describing the equilibrium of the ammonia-soda process:

$$U_{Na} = a_1 R + a_2 c_{NH_{3c}} + a_3 c_{NaCl} - a_4 T$$

wherein $U_{Na}$ represents the carbonation process yield, T - the temperature of the slurry exiting the carbonation apparatus, $c(NH_{3c})$ - the total ammonia content, $c(NaCl)$ the sodium chloride concentration, R - the carbonation degree value, and $a_1$-$a_4$ - the experimentally derived coefficients. The technical solutions of the invention also result in an increase of the ammoniated brine carbonation plant productivity due to an increase of the a2 coefficient in the above equation.

Moreover, size of the obtained sodium bicarbonate crystals have the lower content of the fraction below 40 μm. Sizes of crystals were determined on the basis of the granulometric analysis carried out with the use of the microscope image analysis. This is reflected in an improvement of the conditions, in which the sodium bicarbonate filtration and washing steps are carried out. This leads, in turn, to lowering of the product weight loss in the step of washing on the filters. The additional advantage of the technical solutions of the invention is lowering the heat consumption in the distillation and calcination processes and in the process of calcium chloride production carried out on the system according to the present invention.

In practical applications of the system according to the invention the cooling process of the slurry in the carbonation columns can be completed at a higher temperature, in the range of 303-313 K. This results from the stronger exothermic effect associated with the higher ammonia concentration in the reaction setup. Moreover, the temperature at the exit from CL in the range of 303-313 K promotes faster formation of the sodium bicarbonate crystals, which reach the required granulometric parameters quicker. Deeper cooling of the system has neither physical nor economic significance.

The above technical solution according to the invention and its advantages will become more clear based on the following working examples of the invention.

The object of the invention is illustrated on the drawing, where the Figure shows a system of devices for carbonation of the ammoniated brine in the ammonia-soda process utilized in the working examples of the invention.

**List of abbreviations used on the figure and in the examples:**

PLM — lime blender (prelimer),
RH-DS — distiller heater,
DS — distiller,
RH-CD — diaphragm heater of the post-filtration lye,
RG-RH —cooler of the gases from the ammonia regeneration system,
DT — expander of the liquid from the distiller (detander),
CC — distillation column of ammonia from the condensates,
MAB — small absorber (enriching the ammoniated brine in ammonia)
LCL — scrubber of the carbonation gases,
ABM I — absorber, top part,
ABM II — absorber, bottom part,
SA — ammoniated brine,
SB-CL (SB/CL) — scrubber washer of the column gases,
LPV-FLR — scrubber of the gases from the vacuum pump filter,
LPV-ABM — scrubber of the gases from the absorber of the vacuum pump,
RS-AB —tank of the post-ammonia absorption brine,
CL — precipitating carbonation column (production)

**Examples**

The Figure shows the system according to the present invention, in which the processes described in Examples 1 — 6 were carried out.

**Example 1**

The carbonating column having volume of 97.5 $m^3$ is charged with 55 $m^3 \cdot h^{-1}$ of the ammoniated brine with the ammonia concentration of 4.50 $mol \cdot dm^{-3}$, 1.78 $mol \cdot dm^{-3}$ $CO_2$ and 4.78 $mol \cdot dm^{-3}$ NaCl and, at the same time, carbonated with a top gas having 40% $CO_2$ concentration at the flow rate of 4400 $Nm^3 \cdot h^{-1}$ and with a bottom gas having 80% $CO_2$ concentration at the flow rate of 2800 $Nm^3 \cdot h^{-1}$. Into the column, at 75% of its height, the precarbonated brine is introduced with the increased ammonia content (5.54 $mol \cdot dm^{-3}$) at the rate of 2.75 $m^3 \cdot h^{-1}$ from MAB after cooling to the temperature of 313 K. At the exit from the carbonating column, the yield of the soda-ammonia process is 75.8%, slurry temperature is 303 K, chloride ion concentration is 4.92 $mol \cdot dm^{-3}$, general alkalinity is 5.31 $mol \cdot dm^{-3}$, and bound ammonia is 3.73 $mol \cdot dm^{-3}$.

**Example 2**

The carbonating column having volume of 97.5 $m^3$ is charged with 60 $m^3 \cdot h^{-1}$ of the ammoniated brine with the ammonia concentration of 4.50 $mol \cdot dm^{-3}$, 1.85 $mol \cdot dm^{-3}$ $CO_2$ and 4.90 $mol \cdot dm^{-3}$ NaCl and, at the same time, carbonated with a top gas having 40% $CO_2$ concentration at the flow rate of 4500 $Nm^3 \cdot h^{-1}$ and with a bottom gas having 80% $CO_2$ concentration at the flow rate of 2930 $Nm^3 \cdot h^{-1}$. Into the column, at the 75% of its height, the precarbonated brine is introduced with the increased ammonia content (5.89 $mol \cdot dm^{-3}$) at the rate of 9.00 $m^3 \cdot h^{-1}$ from MAB after cooling to the temperature of 313 K. At the exit from the carbonating column, the yield of the soda-ammonia process is 78.5%, slurry temperature is 308 K, chloride ion concentration is 5.11 $mol \cdot dm^{-3}$, general alkalinity is 5.98 $mol \cdot dm^{-3}$, and bound ammonia is 4.01 $mol \cdot dm^{-3}$.

### Example 3

The carbonating column having volume of 97.5 m$^3$ is charged with 62 m$^3\cdot$h$^{-1}$ of the ammoniated brine with the ammonia concentration of 4.50 mol$\cdot$dm$^{-3}$, 1.85 mol$\cdot$dm$^{-3}$ CO$_2$ and 4.90 mol$\cdot$dm$^{-3}$ NaCl and, at the same time, carbonated with a top gas having 40% CO$_2$ concentration at the flow rate of 4600 Nm$^3\cdot$h$^{-1}$ and with the bottom gas having 80% CO$_2$ concentration at the flow rate of 2920 Nm$^3\cdot$h$^{-1}$. Into the column, at the 60% of its height, the precarbonated brine is introduced with the increased ammonia content (6.12 mol$\cdot$dm$^{-3}$) at the rate of 12.00 m$^3\cdot$h$^{-1}$ from MAB after cooling to the temperature of 313 K. At the exit from the carbonating column, the yield of the soda-ammonia process is 78.9%, slurry temperature is 312 K, chloride ion concentration is 5.07 mol$\cdot$dm$^{-3}$, general alkalinity is 5.96 mol$\cdot$dm$^{-3}$, and bound ammonia is 4.00 mol$\cdot$dm$^{-3}$.

### Example 4

The carbonating column having volume of 97.5 m$^3$ is charged with 60 m$^3\cdot$h$^{-1}$ of the ammoniated brine with the ammonia concentration of 4.50 mol$\cdot$dm$^{-3}$, 1.85 mol$\cdot$dm$^{-3}$ CO$_2$ and 4.90 mol$\cdot$dm$^{-3}$ NaCl and, at the same time, carbonated with a top gas having 40% CO$_2$ concentration at the flow rate of 4500 Nm$^3\cdot$h$^{-1}$ and with a bottom gas having 80% CO$_2$ concentration at the flow rate of 2930 Nm$^3\cdot$h$^{-1}$. Into the column, at the 60% of its height, the precarbonated brine is introduced with the increased ammonia content (6.50 mol$\cdot$dm$^{-3}$) at the rate of 15.00 m$^3\cdot$h$^{-1}$ from MAB by two stub pipes at one level, after cooling to the temperature of 313 K. At the exit from the carbonating column, the yield of the soda-ammonia process is 79.1%, slurry temperature is 314 K, chloride ion concentration is 5.03 mol$\cdot$dm$^{-3}$, general alkalinity is 5.97 mol$\cdot$dm$^{-3}$, and bound ammonia is 3.98 mol$\cdot$dm$^{-3}$.

### Example 5

The carbonating column having volume of 97.5 m$^3$ is charged with 58 m$^3\cdot$h$^{-1}$ of the ammoniated brine with the ammonia concentration of 4.48 mol$\cdot$dm$^{-3}$, 1.81 mol$\cdot$dm$^{-3}$ CO$_2$ and 4.87 mol$\cdot$dm$^{-3}$ NaCl and, at the same time, carbonated with a top gas having 40% CO$_2$ concentration at the flow rate of 4420 Nm$^3\cdot$h$^{-1}$ and with a bottom gas having 80% CO$_2$ concentration at the flow rate of 2940 Nm$^3\cdot$h$^{-1}$. Into the column, at the 30% of its height, the precarbonated brine is introduced with the increased ammonia content (6.39 mol$\cdot$dm$^{-3}$) at the rate of 15.00 m$^3\cdot$h$^{-1}$ from MAB by two stub pipes at one level, after cooling to the temperature of 313 K. At the exit from the carbonating column, the yield of the soda-ammonia process is 78.9%, slurry temperature is 314 K, chloride ion concentration is 5.08 mol$\cdot$dm$^{-3}$, general alkalinity is 5.96 mol$\cdot$dm$^{-3}$, and bound ammonia is 4.01 mol$\cdot$dm$^{-3}$.

### Example 6

The carbonating column having volume of 97.5 m$^3$ is charged with 55 m$^3\cdot$h$^{-1}$ of the ammoniated brine with the ammonia concentration of 4.50 mol$\cdot$dm$^{-3}$, 1.78 mol$\cdot$dm$^{-3}$ CO$_2$ and 4.78 mol$\cdot$dm$^{-3}$ NaCl and, at the same time, carbonated with a top gas having 40% CO$_2$ concentration at the flow rate of 4410 Nm$^3\cdot$h$^{-1}$ and with a bottom gas having 80% CO$_2$ concentration of at the flow rate of 2820 Nm$^3\cdot$h$^{-1}$. Into the column, at the 90% of its height, the precarbonated brine is introduced with the increased ammonia content (5.58 mol$\cdot$dm$^{-3}$) at the rate of 3.50 m$^3\cdot$h$^{-1}$ from MAB after cooling to the temperature of 313 K. At the exit from the carbonating column, the yield of the soda-ammonia process is 75.9%, slurry temperature is 303 K, chloride ion concentration is 4.91 mol$\cdot$dm$^{-3}$, general alkalinity is 5.30 mol$\cdot$dm$^{-3}$, and bound ammonia is 3.73 mol$\cdot$dm$^{-3}$.

Conditions under which the method was carried out and the yield of the soda-ammonia process as obtained in the above Examples were summarized in the following Table.

Table 1. Parameters of the experimental process

|  | MD | $V_{kol}$ | $Q_{sol}$ | $cNH_3$ | $cCO_2$ | cNaCl | $Q_{gg}$ | $Q_{gd}$ | $cNH_{3ad}$ | $V_{solad}$ | U | [C1$^-$] | z.o. | [NH$_4$Cl] |
|---|---|---|---|---|---|---|---|---|---|---|---|---|---|---|
| Ex.1 | 75 | 97.5 | 55 | 4.50 | 1.78 | 4.78 | 4400 | 2800 | 5.54 | 2.75 | 75.8 | 4.92 | 5.31 | 3.73 |
| Ex. 2 | 75 | 97.5 | 60 | 4.50 | 1.85 | 4.90 | 4500 | 2930 | 5.89 | 9.00 | 78.5 | 5.11 | 5.98 | 4.01 |
| Ex. 3 | 60 | 97.5 | 62 | 4.50 | 1.85 | 4.90 | 4600 | 2920 | 6.12 | 12.0 | 78.9 | 5.07 | 5.96 | 4.00 |
| Ex. 4 | 60 | 97.5 | 60 | 4.50 | 1.85 | 4.90 | 4500 | 2930 | 6.50 | 15.0 | 79.1 | 5.03 | 5.97 | 3.98 |
| Ex. 5 | 30 | 97.5 | 58 | 4.48 | 1.81 | 4.87 | 4420 | 2940 | 6.39 | 15.0 | 78.9 | 5.08 | 5.96 | 4.01 |

(continued)

|  | MD | $V_{kol}$ | $Q_{sol}$ | $cNH_3$ | $cCO_2$ | $cNaCl$ | $Q_{gg}$ | $Q_{gd}$ | $cNH_{3ad}$ | $V_{solad}$ | U | $[Cl^-]$ | z.o. | $[NH_4Cl]$ |
|---|---|---|---|---|---|---|---|---|---|---|---|---|---|---|
| Ex. 6 | 90 | 97.5 | 55 | 4.50 | 1.78 | 4.78 | 4410 | 2820 | 5.58 | 3.50 | 75.9 | 4.91 | 5.30 | 3.73 |

Ex. - Example
MD — dosing location [% of the carbonating column height]
$V_{kol}$ — column volume [m$^3$]
$Q_{sol}$ — brine flow rate [m$^3 \cdot$h$^{-1}$]
$cNH_3$ — initial ammonia concentration [mol$\cdot$dm$^{-3}$]
$cCO_2$ - initial carbon dioxide concentration [mol$\cdot$dm$^{-3}$]
$cNaCl$ — initial sodium chloride concentration [mol$\cdot$dm$^{-3}$]
$Q_{gg}$ — top gas flow rate [m$^3 \cdot$h$^{-1}$]
$Q_{gd}$ — bottom gas flow rate [m$^3 \cdot$h$^{-1}$]
$cNH_{3ad}$ — ammonia concentration in the additionally $NH_3$ saturated brine [mol$\cdot$dm$^{-3}$]
$V_{solad}$ — volume of the additionally saturated brine [m$^3$]
U — yield of the soda-ammonia process [%]
$[Cl^-]$ — chloride ion concentration at the column exit [mol$\cdot$dm$^{-3}$]
z.o. — general alkalinity at the column exit [mol$\cdot$dm$^{-3}$]
$[NH_4Cl]$ — bound ammonia at the column exit [mol$\cdot$dm$^{-3}$]

**Claims**

1. System of devices for carbonation of ammoniated brine in the ammonia-soda process comprising an ammonia distillation column (CC), an absorber (MAB) and a carbonating column (CL), **characterized in that** a gas pipeline exiting an ammonia distillation column (CC) is equipped with a valve for directing portion of gas from the ammonia distillation column (CC) into a stub pipe of the absorber (MAB), wherein said brine constitutes the absorbing liquid, which is delivered to the absorber (MAB) with a separate stub pipe, while an outlet pipeline at the bottom of the absorber (MAB) is equipped with a pump and an installation for supplying the brine with increased $NH_3$ content to the carbonating column (CL) at 30-90% of the height thereof.

2. The system according to claim 1, wherein the outlet pipeline from the absorber (MAB) is equipped with a valve for directing portion of the brine with increased $NH_3$ content to the bottom of an absorber (ABM) in a post-carbonation gases scrubber column (LCL).

3. The system according to claim 1 or 2, wherein the outlet pipeline from the absorber (MAB) is equipped with an additional valve for directing portion of the brine with increased $NH_3$ content to a post-ammonia absorption brine tank (RS-AB).

**Patentansprüche**

1. Ein System von Vorrichtungen zur Carbonatisierung von ammoniakhaltiger Sole im Rahmen des Ammoniak-Soda-Verfahrens, das eine Ammoniak-Destillationssäule (CC), einen Absorber (MAB) und eine Carbonatisierungssäule (CL) umfasst, **dadurch gekennzeichnet, dass** die aus der Ammoniak-Destillationssäule (CC) herausgehende Gasleitung mit einem Ventil ausgestattet ist, um einen Teil des Gases aus der Ammoniak-Destillationssäule (CC) in eine Stichleitung des Absorbers (MAB) zu leiten, wobei die genannte Sole als die Absorptionsflüssigkeit fungiert, die dem Absorber (MAB) mit einer separaten Stichleitung zugeführt wird, während eine Auslassleitung am Boden des Absorbers (MAB) mit einer Pumpe und einer Anlage zur Soleversorgung mit erhöhtem NH3-Gehalt zu der Carbonatisierungssäule (CL) im Bereich der 30-90% ihrer Höhe ausgestattet ist.

2. Ein System nach Anspruch 1, wobei die Auslassleitung aus dem Absorber (MAB) mit einem Ventil ausgestattet ist, um einen Teil der genannten Sole mit erhöhtem NH3-Gehalt zum Boden des Absorbers (ABM) in einer Nach-Carbonatisierungssäule (LCL) zu leiten.

3. Ein System nach Anspruch 1 oder 2, wobei die Auslassleitung aus dem Absorber (MAB) mit einem zusätzlichen Ventil ausgestattet ist, um einen Teil der Sole mit erhöhtem NH3-Gehalt in einen Nach-Ammoniak-Absorptions-Solebehälter (RS-AB) zu leiten.

## Revendications

1. Système de dispositifs de carbonatation de saumure ammoniacale dans le procédé ammoniac-soude comprenant une colonne de distillation d'ammoniac (CC), un absorbeur (MAB) et une colonne de carbonatation (CL), **caractérisé en ce qu'**un gazoduc sortant d'une colonne de distillation d'ammoniac (CC) est équipé d'une vanne pour diriger une partie du gaz de la colonne de distillation d'ammoniac (CC) dans un embout de l'absorbeur (MAB), dans lequel ladite saumure constitue le liquide absorbant, qui est délivré à l'absorbeur (MAB) avec une tubulure séparée, tandis qu'une canalisation de sortie au bas de l'absorbeur (MAB) est équipée d'une pompe et d'une installation pour fournir la saumure avec une teneur en NH3 à la colonne de carbonatation (CL) à 30-90% de la hauteur de celle-ci.

2. Système selon la revendication 1, dans lequel la canalisation de sortie de l'absorbeur (MAB) est équipée d'une vanne pour diriger une partie de la saumure avec une teneur accrue en NH3 vers le bas d'un absorbeur (ABM) dans une colonne de lavage de gaz post-carbonatation (LCL).

3. Système selon la revendication 1 ou 2, dans lequel la canalisation de sortie de l'absorbeur (MAB) est équipée d'une vanne supplémentaire pour diriger une partie de la saumure avec une teneur accrue en $NH_3$ vers un réservoir de saumure à absorption post-ammoniac (RS-AB).

PRIOR ART

Drawing

**Figure**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 39421
- PL 158595

- RU 2209181 C2